# EUROPEAN PATENT SPECIFICATION

(11) **EP 0 848 590 B1**
(45) Date of publication and mention of the grant of the patent: **31.10.2001**
(21) Application number: 96928468.6
(22) Date of filing: 13.08.1996
(51) Int. Cl.: A23D 7/015, A23C 9/15

(54) **VEGETABLE AND DAIRY FAT BASED SPREAD**
BROTAUFSTRICH AUF BASIS VON PFLANZLICHEM FETT UND MILCHFETT
PATE A TARTINER A BASE DE GRAISSES VEGETALES ET ANIMALES

(30) Priority: 08.09.1995 EP 95202447
(43) Date of publication of application: 24.06.1998
(73) Proprietor: UNILEVER N.V., 3013 AL Rotterdam (NL); UNILEVER PLC, London EC4P 4BQ (GB)
(72) Inventor: RECKWEG, Freek, D-87474 Buchenberg-Ahegg (DE)
(74) Representative: Boerma, Caroline
(86) International application number: EP9603603
(87) International publication number: WO9708956

(56) References cited:
- EP-A- 0 483 896
- EP-A- 0 540 085
- EP-A- 0 540 087
- WO-A-93/17565
- WO-A-96/03888
- GB-A- 574 389
- GB-A- 1 261 910
- US-A- 4 569 846

## Description

The invention relates to a creamy, cultured, dairy based spread suitable as a table spread for use on bread or crackers, and which spread is prepared from a non-dairy fat, a dairy base, such as cream, milk, and the like, including butter-fat, e.g. such being present in cream, which is then cultured, and heated to stop further acidification.

Dairy based, cultured spreads have been described in British Patent Specification GB 1 261 910. In this document, spreads are described which are obtained by dispersing skim milk powder in water, adding molten butter, adding a culture cooling and re-pasteurizing. The products have a fat content of about 45%, and have a whey protein/casein ratio as found in milk (which is about 0.2). The products obtained have a fresh-cheese like texture and taste. No reference to a vegetable fat is made.

In DE 2 300 663, low calorie spreads are described prepared by pasteurizing skimmed milk, pasteurizing, homogenizing and cooling, mixing with lactic acid cultures and structuring agents, and then filling cups or tubes, and cooling it at a pH of about 4.8. Such product is even when refrigerated prone to post-souring, and flocculation will occur easily, accompanied by visible whey separation. No reference to a vegetable fat is made.

The present invention aims at water-continuous spreads which are very suitable as butter-replacement for cold uses, such as spreading on bread or toast, as an underlayer, and whereby the fat comprises non-dairy fat, which preferably is a vegetable fat, in amounts between 10-55 wt% based on the total weight amount of fat present.

The present invention regards a creamy, cultured, vegetable and dairy fat based water continuous spread comprising less than 35% fat of which 10-55 wt% is a non-dairy fat, up to 4.5% milk protein, optionally up to 2% structuring agent, gelatin or a gelatin replacer, the spread having a pH value between 4.6 and 5.2, and a Stevens value hardness at 10°C of 200-500 g and of 50-250 g at 20°C, a whey protein to casein weight ratio higher than in milk, and the spread having a butter-like mouthfeel, texture and taste. It is further preferred that the non-dairy fat is a vegetable fat.

In a more preferred embodiment, the present invention regards a creamy, cultured, vegetable and dairy fat based water continuous spread comprising less than 35% fat of which 10-55 wt% is a non-dairy fat, up to 4.5% milk protein, optionally up to 2% structuring agent, gelatin, the spread having a pH value between 4.6 and 5.2, and a Stevens value hardness at 10°C of 200-500 g and of 50-250 g at 20°C, a whey protein to casein weight ratio higher than in milk, and the spread having a butter-like mouthfeel, texture and taste. Also in this embodiment it is preferred that the non-dairy fat is a vegetable fat.

Accordingly, the present invention provides a water-continuous, low fat spread having butter like taste and texture characteristics. The presently claimed spread derives its taste from having been cultured, i.e. at least part of the dairy ingredients having been subjected to the influence of acidulating micro-organisms like lactic acid bacteria, cheese starter cultures etc. Unlike fresh cheese, the product of the present invention has a very rich, milky taste with a creamy and butter-like impression, and hence, shows high similarity to butter.

These low fat spread have the unique properties of the fat comprising 10-55% of a non dairy fat, which preferably is a vegetable fat, combined with the spread having butter like taste and texture characteristics. It is believed that the presently claimed spread derives its taste to a large extent from having been cultured, i.e. at least part of the dairy ingredients having been subjected to the influence of acidulating micro-organisms like lactic acid bacteria, cheese starter cultures etc. Unlike fresh cheese, the product of the present invention has a very rich, milky taste with a creamy and butter-like impression, and hence, shows high similarity to butter. By the spread comprising a fat phase which comprises 10-55% of a non dairy fat which preferably is a vegetable fat, the spread provides the additional health advantages when compared to a product comprising dairy fat only. E.g., in accordance with the invention, the spread can contain a significant amount of its fat in the form of unsaturated fatty acid components, if so desired, without any disadvantage in taste and texture performance when compared to products having dairy fat as the fat component.

In this description and claims the expression "spread" is intended to mean a plastic, spreadable product which can be applied onto bread at room temperature without tearing the bread. The spreads of the present invention have a Stevens value of 200-500 g at 10°C and 50-250 at room temperature (about 20°C). The expression "dairy based" refers to products of which at least 40% of the solids are derived from milk.

It is an object of the invention to provide a dairy based spread product having a fat content below 35 wt% giving an organoleptic impression of containing considerably more fat and having a consistency comparable to that of conventional butter and butter-like spreads such as margarine.

Surprisingly, it was found that butter like products can be obtained which can be used as a replacement for butter which benefit the pleasant characteristics of butter, such as fatty impression, dairy taste, milky taste and aftertaste, still neutral and hence, very suitable for use as an underlayer on bread, toast, and the like, and which has a better spreadability than butter at the colder users temperature range. In comparison to butter, the product of the invention is spreadable onto bread without tearing it apart at a broad temperature range, ie. at temperatures varying from refrigerator temperature (about 5°C) to room temperature (20°C) and above (30°C).

It is also an object to provide a mildly, neutral tasting product having a closed keepability of several weeks. In a preferred embodiment, the products of the invention have a closed keepability of 8 weeks or more, which means that no change of taste and structure occurs on storage for such a period.

Fresh cheese based products are available on the market which have pH values below 4.6; these products show an inherent acid impression on eating. Furthermore, the fresh cheese products available have the typical cheese like texture and are more "mousse-like" than the butter-like product presently found, often were found to show syneresis and provide a more sandy impression upon spreading and eating than butter and than the product of the present invention. Furthermore, a more sweet and less sour impression is obtained upon eating the product of the present invention compared to the presently available products. Melting behaviour in the mouth, and mouthfeel of the product of the present invention is clearly different than that of prior art products. None of the products known comprises a combination of vegetable fat and butterfat.

The present product is obtained by fermenting a dairy base, with lactic acid type of cultures such as those which are normally used for acidification of milk products. At this stage of fermenting, the vegetable fat can be present, although the vegetable fat can also be added at a later stage. Examples of such lactic acid type of cultures are Streptococcus lactis, yoghurt cultures such as Streptococcus thermophilus, Lactobacillus delbrueckii subspecies bulgaricus, and Lactobacillus helveticus. In a preferred embodiment of the invention, Streptococcus thermophilus and Lactobacillus bulgaricus are used. The fermentation is stopped in a suitable manner - such as by heating - at a pH value between 4.0 and 5.2, and preferably at a pH value between 4.6 and 5.2. The cultures used are no longer active in the end product to be obtained. The product of the invention has a pH value between 4.6 and 5.2, preferably between 4.7 and 5.2, and most preferred between 4.8 and 5.0.

The expressions "culturing micro organisms" and "cultures" as used in this description and claims are intended not to comprise any microorganisms which not unusually are unintendedly present in dairy products despite hygiene-measures aiming to prevent that. The product of the invention can contain some spore formers which are not destroyed by pasteurization, but cannot grow under the chilled storage conditions used for the presently claimed products.

The product will have a whey protein to casein weight ratio which is higher than that found milk. It was found that the combination of whey protein concentrate which has been added to the product in addition and in combination with the whey protein present in the dairy ingredients used provides a very good water binding. By adding undenatured whey protein, and processing such as homogenizing and heating, in combination with the specific pH as now claimed, a product is obtained showing very little or no syneresis and a very specific, butter comparable texture. Preferably, the ratio whey protein to casein in the product preferably ranges between 0.7 and 1.0.

For obtaining the required spreadability and mouthfeel, in one embodiment of this invention some gelatin will be present. The product comprises at least 0.5 wt% gelatin (based on total weight of the product), and further preferred at least 0.6 wt%. No further beneficial effect was observed for levels above 2%, compared to 2% levels. It was found that if gelatin of a bloom strength of 250 is used, the best products are obtained if 0.8 - 1.2 wt% gelatin is used, based on fat free material. Preferred is to use 1.1 wt% gelatin. If gelatin of another bloom strength is used, other weight ranges are applied providing an equivalent structuring performance.
As these days it is sometimes desired to have no gelatin present in consumer products, a very specific embodiment of this invention allows that instead of gelatin, a so called gelatin replacer is used. Gelatin replacers are components or compositions which have similar mouthfeel behaviour, and similar performance, such as water binding and melting properties compared with gelatin. Examples of suitable gelatin replacers are described in, inter alia, European Patent Application EP 496466 and in EP 474299 and are often very specific or specifically treated components or compositions. Amounts used are in addition to those indicated for the structuring agent below.

The product contains less than 4.5 wt% of milk protein. It was found that if more protein is present, a thick, cheese-like product is obtained. Preferably, the milk protein level ranges between 2 and 4.5 wt%, preferably between 2.3 and 4.2 wt%, and most preferred between 2.7 and 3.9 wt%.

The fat level of the product of the invention is below 35 wt%, 45-90 wt% of the fat present being a dairy fat. Surprisingly, it was found that without the spread comprising dairy fat alone as a fat source, the presence of up to 55 wt% of a non-dairy fat, and in particular a vegetable fat provided a product having the dairy, creamy butter-like impression.
In its highly preferred embodiment, the non-dairy fat is a vegetable fat or fat blend having a solids content at different temperatures (N-line) similar to that of butter.

Suitably, 15-50 wt% of the fat is a vegetable fat, and preferably, 20-45 wt% is a vegetable fat. In addition to the butter fat, the fat that can be used can be any known vegetable fat. Preferred fat, however, are: palmkernel oil, soybean oil, rapeseed oil, coconut oil, sunflower oil, safflower oil, or fully or partially hardened fractions thereof. In a further preferred embodiment, the total amount of saturated fatty acid components in the fat is less than 45 wt%, based on the total amount of fatty acid components, and further preferred less than about 30 wt%.

Preferably the spread comprises less than 30 wt% and particularly less than 28 wt% fat. Suitably, the product will contain more than 15 wt% of fat.
The dairy fat present in the product can suitably be obtained from the dairy source used, such as cream, whole milk, protein enriched milk, concentrated milk, filled milk and mixtures of two or more thereof, the use of cream as at least one butter-fat source being preferred.

The dairy source which is used for obtaining the presently claimed products can, in addition to those mentioned above, also be skim milk.

Optionally, up to 1%, and preferably up to 0.5%, based on the total weight of the end product, of a structuring agent not being a protein is present. Examples of such agents are locust bean gum, carboxy methyl cellulose, xanthan, guar gum, alginate or combinations thereof. Other suitable agents not mentioned here can be applied as well. Although higher amounts of such a structuring agent can be applied, the presence in higher amounts will negatively influence the taste and mouthfeel of the product.
The spreadability may very suitably be controlled by adding the structuring agent in such amount that the final product will get a Stevens value at 10°C (method for determination defined in this specification) between 200 and 500 g and in particular between 225 and 400 g.

Optionally, usual additives for spreads such as salt, herbs, spices, flavours, colouring matter, preservatives and the like may be added, although it is believed that for obtaining a suitable underlayer, butter like spread none of these is needed. Normally, for use as a butter like spread at least some salt will be present.

The invention also provides a process for obtaining a product as meant herein before comprising the pasteurizing of cream, skim milk, whole milk, concentrated milk with optionally some water, filled milk and mixtures of two or more thereof, additional whey protein and, optionally, structuring agent, and vegetable fat, cooling down to culturing temperature, inoculating with an acidulating bacteria culture and fermenting until a pH of less than 5.5, preferably less than 5.2 is obtained, controlling the pH value to ≥ 4.0, preferably to a pH value ≥ 4.6, and further preferred ≥ 4.8 by heating the mixture to above 60°C to inactivate the culturing organisms, optionally adding additional vegetable fat, non-dairy cream, dairy cream, sweet cream, or other dairy product listed above until a pH value of 4.6 to 5.2 is obtained, homogenizing the resulting product at 50-600 bar, preferably between 75 and 400 bar, and further preferred between 100 and 300 bar while at a temperature above 35°C until the required structural properties are obtained, the components not listed here, for example such as the gelatin or gelatin replacer, preservatives and the like if so desired being added at any suitable moment in this process.

In the process, acidifying and homogenization can be carried out in any order. It is preferred to homogenize at a temperature above 60°C.

For obtaining an increased closed keepability the spread is filled into containers while at a temperature in excess of 65°C which containers then are hermetically sealed. By filling at a temperature in excess of 70°, a still better keepability is obtainable. By this higher temperature, the shelf life of the product in the closed container can be 8 weeks or even more.

The invention will be exemplified in the following examples of some practical embodiments thereof. Percentages used in the description, examples and claims refer to weights, unless expressly indicated otherwise.

### Examples

5 products of different fat composition were prepared and tested by an expert panel. The products were prepared as follows.

To 7.76 kg of a cream composition (30%fat) of which the composition is indicated in Table I, 1.11 kg of a mixture consisting of 175 g of milk protein concentrate (70%), 30 grams of Meyprodan 200 (ex Meyhall), 1 g of carotene (10%), 24 g of water, and 0.9 kg of milk was added. The composition was pasteurized at 85°C for 10 minutes, and cooled down to 44°C. Thereto, about 0.7 kg of gelatin was added, after which homogenisation at 200 bar took place. To the homogenized composition 0.4 kg of a yoghurt culture was added, whereafter the fermentation was allowed to proceed until a pH of about 4.8 was reached. The fermentation was stopped by heating the mixture to 58°C. The obtained product was homogenized at 300 bar, and subsequently heated to a temperature of 75°C for filling the small containers. The product was cooled down to below 10°C and stored at chill temperature.

**TABLE I**

| | Ex. 1 | Ex. 2 | Ex. 3 | Ex. 4 | Comp |
|---|---|---|---|---|---|
| cream (40% fat) | 5.2 | 3.25 | 4.55 | 5.2 | 6.5 |
| skimmilk (0% fat) | 2.94 | 4.112 | 3.332 | 2.94 | 2.16 |
| non-dairy fat(ndf) | 0.52 | 1.298 | 0.778 | 0.52 | 0 |
| ndf composition | A | B | B | B | - |
| % ndf on total fat | 20 | 50 | 30 | 20 | 0 |
| Fat composition A was a groundnut based liquid table oil. | | | | | |

Fat composition B: 27% BO, 8 % BO28, 5% PO42, 45% of a blend prepared by interesterification of a composition of 36CN/33PO/22dfPOs/9RP41, and 15% RP. The fat blend had an N10 value of between 28 and 33, an N20 value of at least 13, an N30 value of less than 3.5, and an N35 value of less than 1.

From testing on spreadability, taste, appearance and aftertaste, it became clear that the product according to the invention had a very high similarity to butter. Almost no difference was found between the products of the invention and the product comprising dairy fat as the only fat present in the product.

## Claims

1. Creamy, cultured dairy based water continuous spread comprising less than 35% fat of which 10-55% is a non-dairy fat and 90-45% is a dairy fat, up to 4.5% milk protein, gelatin or a gelatin replacer, optionally up to 1% structuring agent, the spread having a pH value between 4.6 and 5.2, and a Stevens value hardness at 10°C of 200-500 g and of 50-250 g at 20°C, a whey protein to casein weight ratio higher than in milk, the spread having a butter-like mouthfeel, texture and taste.

2. Spread according to claim 1, wherein gelatin is present.

3. Spread according to claim 2, wherein at least 0.5 wt% gelatin is present.

4. Spread according to any one of claims 1 to 3, wherein the non-dairy fat is a vegetable fat.

5. Spread according to any one of claims 1 to 4, wherein the fat composition comprises 20-45% of a vegetable fat and 80-55% of a dairy fat.

6. Spread according to any one of claims 1-5,comprising less than 30% fat and preferably less than 28%.

7. Spread according to any one of claims 1-6, having a pH value of at least 4.7 and preferably between 4.8 and 5.0.

8. Spread according to any one of claims 1 to 7, comprising 2.3 to 4.2 wt% milk proteins.

9. Spread according to any one of claims 1 to 8, wherein the ratio whey protein to casein ranges between 0.7 and 1.0.

10. Process for obtaining a product according to any one of claims 1 to 9, comprising the pasteurizing of cream, skim milk, whole milk, concentrated milk, filled milk and mixtures of two or more thereof, additional whey protein and, optionally, structuring agent, and vegetable fat, cooling down to culturing temperature, inoculating with an acidulating bacteria culture and fermenting until a pH of less than 5.5, preferably less than 5.2 is obtained, controlling the pH value to ≥ 4.5, preferably to a pH value ≥ 4.6, and further preferred ≥ 4.8, optionally adding additional non-dairy cream, cream, sweet cream, or other dairy product listed above until a pH value of 4.6 to 5.2 is obtained, homogenizing the resulting product at 50-600 bar, preferably between 75 and 400 bar, and further preferred between 100 and 300 bar while at a temperature above 35°C until the required structural properties are obtained, the components not listed here such as the gelatin or gelatin replacer being added at any suitable moment in this process.

11. A process according to claim 10, wherein a homogenization step is carried out prior to adding a culturing agent.

## Patentansprüche

1. Cremiger, kultivierter, wasserkontinuierlicher Aufstrich auf Milchbasis, umfassend weniger als 35% Fett, von dem 10 bis 55 % ein Nicht-Milchfett und 90 bis 45% ein Milchfett darstellen, bis zu 4,5% Milchprotein, Gelatine oder einen Gelatineersatzstoff, optional bis zu 1% Strukturierungsmittel, wobei der Aufstrich einen pH-Wert zwischen 4,6 und 5,2, einen Stevens-Härtewert bei 10°C von 200 bis 500 g und von 50 bis 250 g bei 20°C, ein Molkeprotein- zu Casein-Gewichtsverhältnis größer als in Milch aufweist, und wobei der Aufstrich butterähnliches Mundgefühl, Textur und Geschmack aufweist.

2. Aufstrich nach Anspruch 1, worin Gelatine vorhanden ist.

3. Aufstrich nach Anspruch 2, worin mindestens 0,5 Gew.-% Gelatine vorliegen.

4. Aufstrich nach mindestens einem der vorhergehenden Ansprüche 1 bis 3, worin das Nicht-Milchfett ein Pflanzenfett darstellt.

5. Aufstrich nach mindestens einem der vorhergehenden Ansprüche 1 bis 4, worin die Fettzusammensetzung 20 bis 45% Pflanzenfett und 80 bis 55% Milchfett umfaßt.

6. Aufstrich nach mindestens einem der vorhergehenden Ansprüche 1 bis 5, umfassend weniger als 30% Fett und bevorzugt weniger als 28%.

7. Aufstrich nach mindestens einem der vorhergehenden Ansprüche 1 bis 6 mit einem pH-Wert von mindestens 4,7 und bevorzugt zwischen 4,8 und 5,0.

8. Aufstrich nach mindestens einem der vorhergehenden Ansprüche 1 bis 7, umfassend 2,3 bis 4,2 Gew.-% Milchproteine.

9. Aufstrich nach mindestens einem der vorhergehenden Ansprüche 1 bis 8, worin das Verhältnis Molkeprotein zu Casein zwischen 0,7 und 1,0 beträgt.

10. Verfahren zur Gewinnung eines Produkts nach mindestens einem der Ansprüche 1 bis 9, umfassend das Pasteurisieren von Rahm, entrahmter Milch, Vollmilch, konzentrierter Milch, abgefüllter Milch und Mischungen von zwei oder mehreren hiervon, zusätzlichem Molkeprotein und optional Strukturierungsmittel und Pflanzenfett, Abkühlen auf Kultivierungstemperatur, Einimpfen einer ansäuernden Bakterienkultur und Fermentieren, bis ein pH-Wert von weniger als 5,5, bevorzugt weniger als 5,2, erhalten wird, Steuern des pH-Werts auf ≥ 4,5, bevorzugt auf einen pH-Wert ≥ 4,6 und weiter bevorzugt ≥ 4,8, gegebenenfalls Zugeben zusätzlichen Nicht-Milchrahms, Rahms, Süßrahms oder anderer oben aufgelisteter Milchprodukte, bis ein pH-Wert von 4,6 bis 5,2 erhalten wird, Homogenisieren des resultierenden Produkts bei 50 bis 600 bar, bevorzugt zwischen 75 und 400 bar und weiterhin bevorzugt zwischen 100 und 300 bar bei einer Temperatur über 35°C, bis die erforderlichen Struktureigenschaften erhalten werden, wobei die hier nicht aufgelisteten Komponenten, wie Gelatine oder Gelatineersatzstoffe, zu jedem geeigneten Zeitpunkt in diesem Verfahren zugegeben werden können.

11. Verfahren nach Anspruch 10, worin ein Homogenisierungsschritt vor der Zugabe eines Kultivierungsmittels durchgeführt wird.

## Revendications

1. Pâte à tartiner crémeuse, mise en culture, à base de matière grasse non laitière et laitière et à phase d'eau continue comprenant moins de 35 % de matières grasses parmi lesquelles de 10 à 55 % en masse sont de la matière grasse non laitière et 90 à 45 % en masse sont de la matière grasse laitière, jusqu'à 4,5 % de protéine de lait, de façon optionnelle jusqu'à 1 % d'un agent structurant, de la gélatine ou un produit de substitution de la gélatine, la pâte à tartiner ayant une valeur de pH comprise entre 4,6 et 5,2 et une valeur de dureté de Stevens à 10°C de 200 - 500 grammes, et de 50 - 250 grammes à 20°C, un rapport en masse entre protéine de petit lait et caséine supérieur à celui du lait, et la pâte à tartiner présentant une sensation en bouche, une texture et un goût semblables à ceux du beurre.

2. Pâte à tartiner selon la revendication 1, dans laquelle de la gélatine est présente.

3. Pâte à tartiner selon la revendication 2, dans laquelle au moins 0,5 % en masse de gélatine est présente.

4. Pâte à tartiner selon l'une des revendications 1 à 3, dans laquelle la matière grasse non laitière est de la matière grasse végétale.

5. Pâte à tartiner selon l'une des revendications 1 à 4, dans laquelle la composition de matière grasse comprend de 20 à 45 % d'une matière grasse végétale et de 80 à 55 % d'une matière grasse laitière.

6. Pâte à tartiner selon l'une des revendications 1 à 5, comprenant moins de 30 % de matière grasse, et de préférence moins de 28 %.

7. Pâte à tartiner selon l'une des revendications 1 à 6, ayant une valeur de pH d'au moins 4,7, et de préférence comprise entre 4,8 et 5,0.

8. Pâte à tartiner selon l'une des revendications 1 à 7, comprenant de 2,3 à 4,2 % en masse de protéines de lait.

9. Pâte à tartiner selon l'une des revendications 1 à 8, dans laquelle le rapport entre la protéine de petit lait et la caséine est compris entre 0,7 et 1,0.

10. Procédé permettant d'obtenir un produit selon l'une des revendications 1 à 9, comprenant les étapes consistant à pasteuriser la crème, le lait écrémé, le lait entier, le lait concentré, le lait enrichi et les mélanges de deux ou de plusieurs des produits ci-dessus, la protéine de petit lait supplémentaire et, de façon optionnelle l'agent structurant, et la matière grasse végétale, à refroidir le mélange à la température de culture, à inoculer avec une culture de bactérie acidulante et à laisser fermenter jusqu'à ce que l'on obtienne un pH inférieur à 5,5, de préférence inférieur à 5,2, à contrôler la valeur de pH à un niveau supérieur ou égal à 4,0, de préférence à un niveau de pH supérieur ou égal à 4,6, et de façon encore plus préférée à un niveau de pH supérieur ou égal à 4,8, de façon optionnelle en ajoutant de la crème non laitière, de la crème laitière, de la crème douce ou d'autres produits laitiers dont la liste est donnée ci-dessus, et ce jusqu'à l'obtention d'une valeur de pH de 4,6 à 5,2, à homogénéiser le produit qui en résulte à 50 - 600 bars, de entre 100 et 300 bars tout en maintenant la température à un niveau supérieur à 35°C jusqu'à l'obtention des propriétés structurelles souhaitées, les composants non énumérés ici, tels que la gélatine ou le produit de substitution de la gélatine, pouvant être ajoutés si on le souhaite à n'importe quel moment dans le cours du procédé.

11. Procédé selon la revendication 10, dans lequel une étape d'homogénéisation est prévue avant que ne soit ajouté l'agent de mise en culture
